# EUROPEAN PATENT APPLICATION

(11) **EP 2 896 284 A1**
(43) Date of publication of application: **22.07.2015**
(21) Application number: 14193028.9
(22) Date of filing: 13.11.2014
(51) Int. Cl.: A01D 57/20, A01D 61/00

(54) **Draper roller with active retracting cleat crop stripper**

(30) Priority: 13.01.2014 US 201414153493
(71) Applicant: Deere & Company, Moline, IL 61265 (US)
(72) Inventor: Ritter, Aaron S, Milan, Illinois 61264 (US); Corum, Chance M, Moline, Illinois 61265 (US)
(74) Representative: Holst, Sönke

(57) **Abstract**

A stripper roller (103, 105) for a draper header (100) comprises an elongate tubular member (124, 128, 130) defining at least one elongate slot (132, 134); at least one elongate cleat (136, 138) disposed inside the elongate tubular member (124, 128, 130) and is configured to be extended and retracted from the at least one elongate slot (132, 134); and a reciprocating drive (142) that is coupled to the at least one elongate cleat (136, 138) and is configured to extend and retract the at least one elongate cleat (136, 138) as the stripper roller (103, 105) rotates about its central rotational axis (154).

## Description

### Field of the Invention

The invention pertains to agricultural harvesting heads. More particularly it relates to draper heads. Even more particularly it relates to conveying mechanisms for draper heads.

### Background

Agricultural harvesting heads are supported on combine harvesters. They are carried to the field to sever crop plants from the ground and carried this cut crop material rearward and into the combine harvester. The combine harvester, in turn, separates the unwanted parts of the crop plant (branches, stems, seeds, twigs, leaves, husks, stocks, cobs, and the like) from the desirable part (typically grain).

The cut crop material is typically conveyed as a thick irregular mat. One recurrent problem in conveying this mat is that some of the cut crop material will not be released at the end of one endless belt conveyor and received on to the next endless belt conveyor. Instead, some of the cut crop material will not be released by an endless belt conveyor but will be drawn back underneath the endless belt conveyor and jam the conveyor instead of being conveyed to the next endless belt conveyor.

For this reason, various arrangements of been provided to strip the crop from endless belt conveyors carrying mats of cut crop material.

US 2002/129,591 A1, for example, shows an additional roller (30) located at the exit end of a side conveyor of the endless belt type on a draper header. This roller lifts the crop off the exit (inner) end of the side conveyor, carries it over the top of the additional roller and deposits it on a center draper conveyor that runs in a direction transverse to the direction of the side conveyor.

Because some of the cut crop material may become wrapped around the surface of the additional conveyor, a stripper plate is provided to peel off cut crop material resting on the smooth surface of the additional roller. One problem with this arrangement is the difficulty the stripper plate has in preventing cut crop material from becoming wound around the additional roller.

It would be beneficial to provide a stripper roller that is less prone to having crop wrapped around its outer surface. It is an object of this invention to provide such a stripper roller.

### Summary of the Invention

A stripper roller for draper header is provided, comprising an elongate tubular member defining at least one elongate slot; at least one elongate cleat disposed inside the elongate tubular member that is configured to be extended from and retracted into the at least one elongate slot; and a reciprocating drive that is coupled to the at least one elongate cleat and is configured to extend and retract the at least one elongate cleat as the stripper roller rotates about its longitudinal axis.

The at least one elongate cleat may comprise at least two elongate cleats, and the at least one elongate slot may comprise at least two elongate slots.

The at least two elongate slots may be disposed on opposite sides of the elongate tubular member, and each of the at least two elongate slots may support a corresponding one of the at least two elongate cleats.

The at least two elongate slots may be fixed together such that one of said at least two elongate cleats moves to extend from the elongate tubular member as another of said at least two elongate cleats moves to retract into the elongate tubular member during at least a portion of one complete revolution of the stripper roller.

The reciprocating drive may comprise a cam roller and a cam track, and further wherein the cam roller is disposed to follow the cam track.

The cam roller may be operationally coupled to the at least one elongate cleat to extend and retract the at least one elongate cleat as the stripper roller rotates.

The cam roller may be engaged with a shaft to advance and retard the shaft based upon the position of the cam roller on the cam track.

The elongate tubular member may comprise at least one hemispherical shell and the at least one hemispherical shell may form an outer elongate surface of the stripper roller.

The at least one hemispherical shell may comprise at least two hemispherical shells, and the at least one elongate slot may be defined by a space between the at least two hemispherical shells.

The at least one elongate slot may extend substantially the entire length of the stripper roller.

The reciprocating drive may be configured to hold the at least one elongate cleat in an extended position when the at least one elongate cleat is disposed proximate to the top of the stripper roller, and maybe configured to hold the at least one elongate cleat in a retracted position when the at least one elongate cleat is proximate to the bottom of the stripper roller.

A draper header can comprise a left side conveyor, a right side conveyor, a center conveyor, a first stripper roller that is disposed at an inner end of the left side conveyor, and a second stripper roller that is disposed at an inner end of the right side conveyor.

### Brief Description of the Drawings

Figure 1 is a fragmentary perspective view of a draper header in accordance with the present invention.
Figure 2 is a fragmentary detail perspective view of the draper header of Figure 1 showing the roller arrangement.
Figure 3 is a fragmentary detail perspective view of the roller arrangement of Figure 2.
Figure 4 is a fragmentary detail perspective view of the roller arrangement of Figures 2 and 3 with the housing cut away.
Figure 5 is a fragmentary detail perspective view of the roller arrangement of Figures 2-4 with the roller cut away.

### Detailed Description

As used herein, the terms "forward", "front", "in front of", and the like refer to a direction parallel to the direction of travel of the combine as it harvests crop. The terms "rearward", "rear", "behind", and the like refer to a direction opposite to the direction of travel of the combine as it harvests crops. The terms "lateral", "laterally", and the like refer to a direction that is generally horizontal and perpendicular to the direction of travel of the combine as it harvests crops.

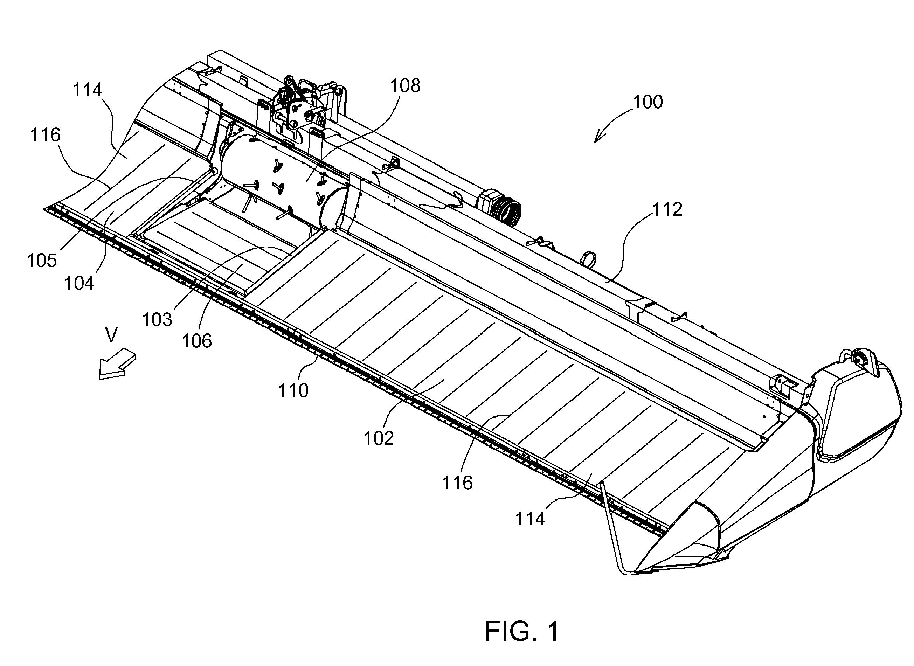

In Figure 1, a draper header 100 includes a left side conveyor 102, a right side conveyor 104, a center conveyor 106, a feed roller 108, and a reciprocating knife 110, all supported on a frame 112. A left side stripper roller 103 and a right side stripper roller 105 are provided

The draper header 100 is supported on a combine (not shown) and is carried to the field in a direction "V" to harvest crops. The reciprocating knife 110 is elongate and extends substantially the entire width of the draper header 100 severs the crop plants near their roots. The crop plants fall backwards on the left side conveyor 102, the right side conveyor 104, and the center conveyor 106.

The three conveyors are of an endless belt type, comprising a web 114 of elastomer-reinforced fabric to which a plurality of elongate cleats 116 are fixed. Each web 114 is supported and conveyed on a plurality of rollers (not shown).

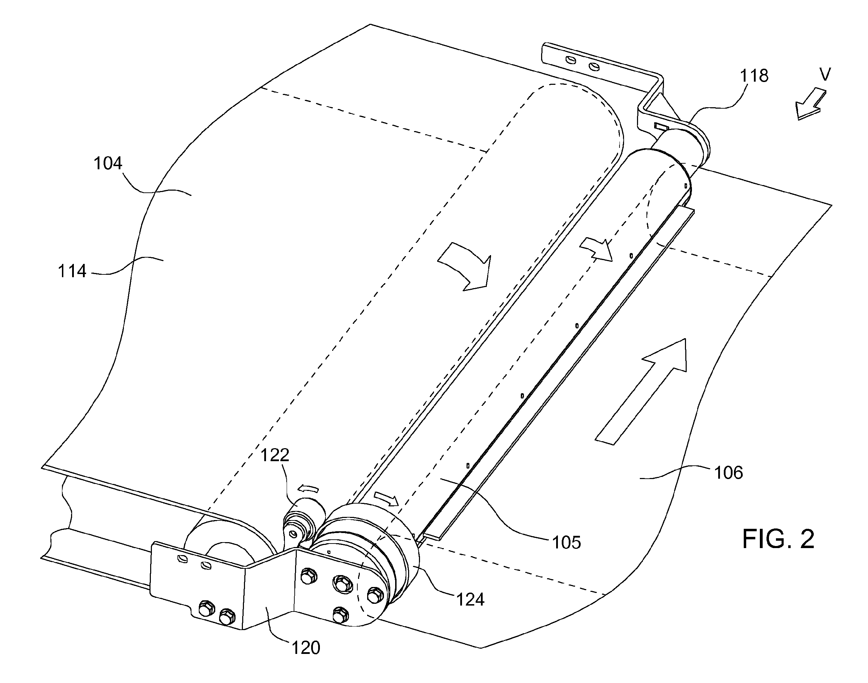

Figure 2 shows a detail portion of the right side conveyor 104 and the center conveyor 106, together with the right side stripper roller 105. The left side conveyor 102 and the left side stripper roller 103 are identically constructed but in mirror image relation. The left side conveyor 102 and left side stripper roller 103 are not described herein for reasons of convenience.

The right side stripper roller 105 is supported on two brackets: a front bracket 120 and the rear bracket 118. A drive roller 122 rests against and drives a drive wheel 124 that forms a part of and is disposed at one end of the right side stripper roller 105. The drive roller 122 rests against the web 114 of the right side conveyor 104. As the right side conveyor 104 runs, the web 114 drives the drive roller 122, which in turn drives the drive wheel 124 in rotation. The right side stripper roller 105 therefore is driven at the same speed as the right side conveyor 104.

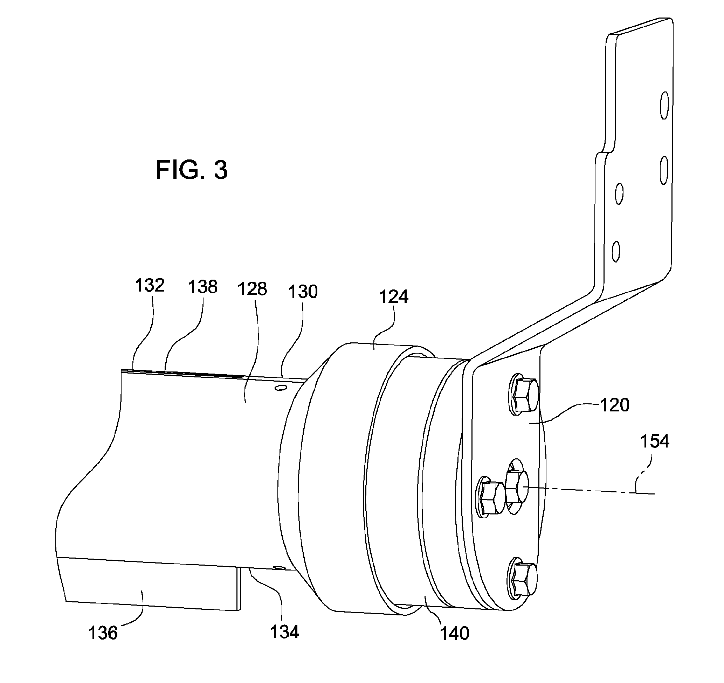

In Figure 3, the drive wheel 124 is fixed to two hemispherical shells, a first hemispherical shell 128 and a second hemispherical shell 130. The hemispherical shells together with the drive wheel 124 and a substantially similar wheel (not shown) disposed at the other end of the right side stripper roller 105 (which also is fixed to the hemispherical shells) together form an elongate tubular member that is generally circular in cross-section and has a hollow interior.

The two hemispherical shells are spaced slightly apart to define therebetween a first elongate slot 132 and a second elongate slot 134. These two elongate slots are disposed on opposite circumferential sides of the right side stripper roller 105, and are directly opposite to each other. A first elongate cleat 136 is slidably supported in and extends outward from the second elongate slot 134. A second elongate cleat 138 is slidably supported in and extends outward from the first elongate slot 132. These two cleats are driven (described below) to be extended outward from and to be retracted inside the shells. A housing 140 is fixed to the front bracket 120 with a plurality of bolts. The housing 140 is stationary and supports the elongate tubular member for rotation about a central rotational axis 154.

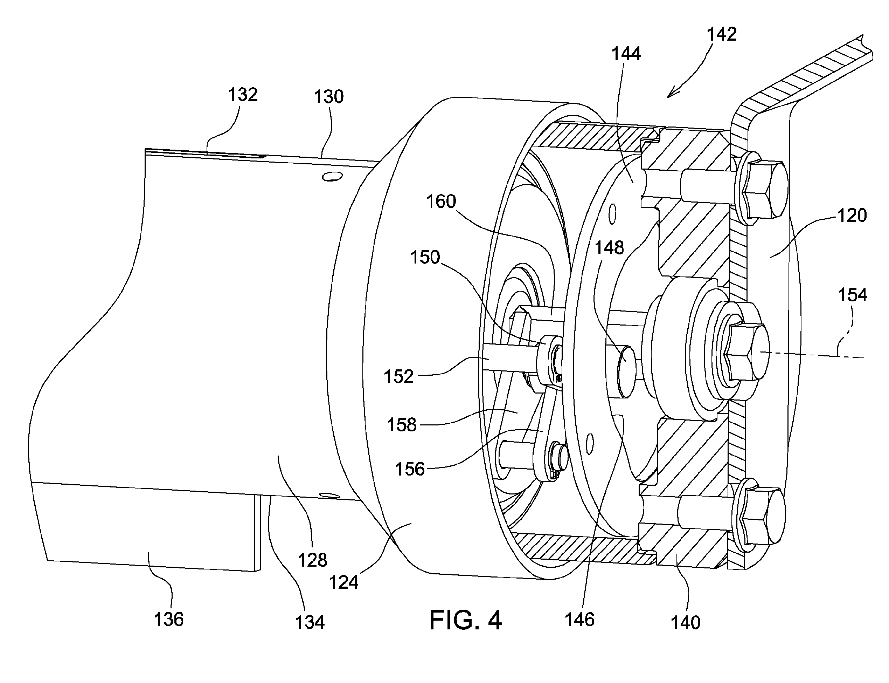

In Figure 4, a reciprocating drive 142 is shown. The reciprocating drive 142 is disposed inside the housing 140 and the drive wheel 124. The reciprocating drive 142 comprises a cam 144 that defines a cam track 146. The cam 144 is fixed to the housing 140 and therefore is stationary. The reciprocating drive 142 also comprises a cam roller 148 that is disposed to rest against and follow the cam track 146. The cam roller 148 is pivotally coupled to an inner end of a first link 150. An outer end of the first link 150 is pivotally coupled to a support 152, that in turn is fixed to the drive wheel 124. A second link 156 has an inner end that is pivotally coupled to the cam roller 148. An outer end of the second link 156 is pivotally coupled to an arm 158 that extends outward from a shaft 160.

As the drive wheel 124 is driven in rotation, the cam roller 148 is rotated about the inside of the housing 140, resting against the cam track 146. As the cam roller 148 rotates, it moves radially inward and outward from the central rotational axis 154. This inward and outward rotation causes the arm 158 (and hence the shaft 160) to be angularly advanced and retarded with respect to the drive wheel 124, the first hemispherical shell 128, and the second hemispherical shell 130.

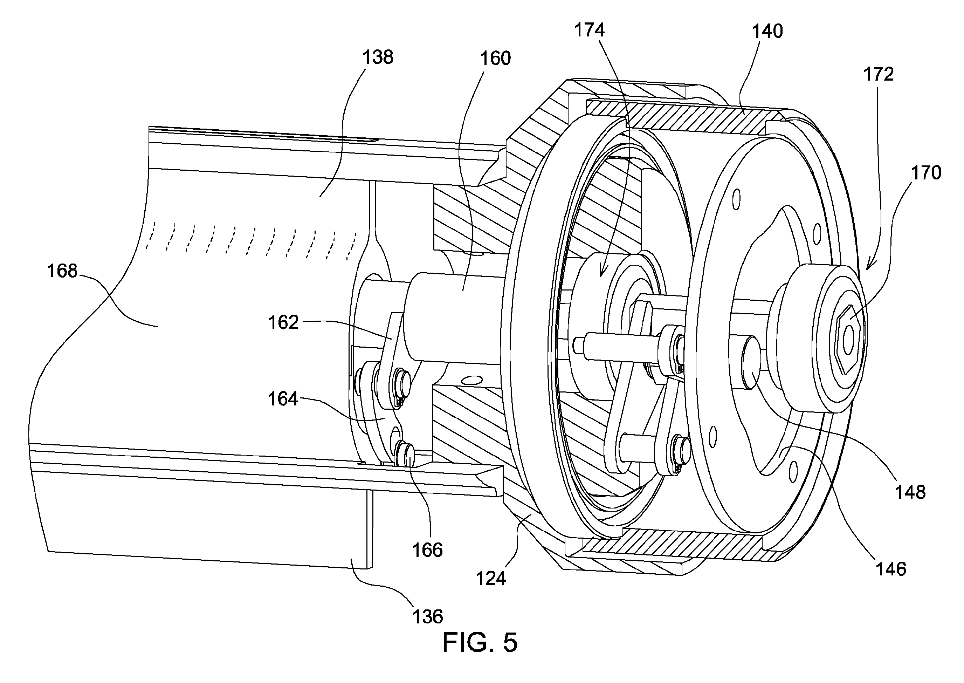

In Figure 5, a second arm 162 is fixed to the shaft 160 and rotates together with the shaft 160 as it is advanced and retarded with respect to the drive wheel 124. A third link 164 is pivotally coupled to an outer end of the second arm 162 at one end. The third link 164 is pivotally coupled to a pin 166 at its other end.

The first elongate cleat 136 and the second elongate cleat 138 are fixed to and extend outward from an elongate tube 168. The elongate tube 168, the first elongate cleat 136 and the second elongate cleat 138 extend substantially the entire length of the right side stripper roller 105. The shaft 160 passes through the elongate tube 168 and extends substantially the entire length of the right side stripper roller 105. The elongate tube 168 defines an oblong hole through which the shaft 160 extends.

As the shaft 160 advances and retards with respect to the drive wheel 124, the shaft 160 oscillates the outer end of the second arm 162 back and forth with respect to the drive wheel 124, the hemispherical shells 128, 130, and the elongate tube 168. This oscillating motion, in turn, oscillates the third link 164. The third link 164, in turn, pulls and pushes on the pin 166. The pin 166 is fixed to the elongate tube 168. As a result, the movement of the cam roller 148 against the cam track 146 causes the elongate tube 168 to slide up and down on the shaft 160, which in turn causes the elongate tube 168 to alternately (a) extend the elongate cleat 138 and retract the elongate cleat 136 simultaneously, and (b) retract the elongate cleat 138 and extend the elongate cleat 136 simultaneously.

The cam track 146 is preferably formed to extend each of the elongate cleats 136, 138 in their respective elongate slots when the slots are rotated into their upward facing position, ready to receive cut crop material from the right side conveyor 104. As the right side stripper roller 105 continues its rotation, rotating the slots inward and downward toward the center conveyor 106, the cam track 146 is preferably formed to retract each cleat, thereby releasing the cut crop material, stripping the cut crop material from the cleat, and preventing the cleat from holding the cut crop material and wrapping it around the right side stripper roller 105. Since the cleats extend from opposite sides of the right side stripper roller 105, as one cleat 136, 138 is extended, the other cleat 136, 138 (which is disposed on the opposite side of the right side stripper roller 105) is simultaneously retracted an equal amount.

An outer end 170 of the shaft 160 is supported in a bearing 172. The bearing 172 supports the outer end 170 in an inner race of the bearing 172. The outer race of bearing 172 is supported inside the housing 140, which is stationary. This arrangement permits the shaft 160 to be supported by bearing 172 and to freely rotate about its central rotational axis 154. The shaft 160 is also supported in a bearing 174. The bearing 174 supports the shaft 160 in its inner race. The outer race of bearing 174 is fixed to the drive wheel 124. This arrangement permits the shaft 160 to be supported by bearing 172 and to rotate relative to the housing 140 and thereby to advance and retard its rotational position about the central rotational axis 154 with respect to the drive wheel 124. A similar bearing arrangement is provided at the other (rear) end of the right side stripper roller 105 to support the other end of the right side stripper roller 105 for rotation and also to permit the shaft 160 to advance and retard with respect to the drive wheel 124.

The arrangements illustrated and described herein are merely examples of one way to create the invention. Someone skilled in the art of this invention would readily see other ways to create the invention that would fall within the scope of the claims. It is the claims that define the scope of the invention.

## Claims

1. A stripper roller (103, 105) for a draper header (100) comprising:
an elongate tubular member (124, 128, 130) defining at least one elongate slot (132, 134);
at least one elongate cleat (136, 138) disposed inside the elongate tubular member (124, 128, 130) that is configured to be extended from and retracted into the at least one elongate slot (132, 134); and
a reciprocating drive (142) that is coupled to the at least one elongate cleat (136, 138) and is configured to extend and retract the at least one elongate cleat (136, 138) as the stripper roller (103, 105) rotates about its central rotational axis (154).

2. The stripper roller (103, 105) of Claim 1, wherein the at least one elongate cleat (136, 138) comprises at least two elongate cleats (136, 138), and wherein the at least one elongate slot (132, 134) comprises at least two elongate slots (132, 134).

3. The stripper roller (103, 105) of Claim 2, wherein the at least two elongate slots (132, 134) are disposed on opposite sides of the elongate tubular member (124, 128, 130), and further wherein each of the at least two elongate slots (132, 134) supports a corresponding one of the at least two elongate cleats (136, 138).

4. The stripper roller (103, 105) of Claim 2, wherein the at least two elongate cleats (136, 138) are fixed together such that one of said at least two elongate cleats (136, 138) moves to extend from the elongate tubular member (124, 128, 130) as another of said at least two elongate cleats (136, 138) moves to retract into the elongate tubular member (124, 128, 130) during at least a portion of one complete revolution of the stripper roller (103, 105).

5. The stripper roller (103, 105) of Claim 1, wherein the reciprocating drive (142) comprises a cam roller (148) and a cam track (146), and further wherein the cam roller (148) is disposed to follow the cam track (146).

6. The stripper roller (103, 105) of Claim 5, wherein the cam roller (148) is operationally coupled to the at least one elongate cleat (136, 138) to extend and retract the at least one elongate cleat (136, 138) as the stripper roller (103, 105) rotates.

7. The stripper roller (103, 105) of Claim 5, wherein the cam roller (148) is engaged with a shaft (160) to advance and retard the shaft (160) based upon a position of the cam roller (148) on the cam track (146).

8. The stripper roller (103, 105) of Claim 1, wherein the elongate tubular member (124, 128, 130) comprises at least one hemispherical shell (128, 130) wherein said at least one hemispherical shell (128, 130) forms an outer elongate surface of the stripper roller (103, 105).

9. The stripper roller (103, 105) of Claim 8, wherein the at least one hemispherical shell (128, 130) comprises at least two hemispherical shells (128, 130), and further wherein the at least one elongate slot (132, 134) is defined by a space between the at least two hemispherical shells (128, 130).

10. The stripper roller (103, 105) of Claim 1, wherein the at least one elongate slot (132, 134) extends substantially an entire length of the stripper roller (103, 105).

11. The stripper roller (103, 105) of Claim 1, wherein the reciprocating drive (142) is configured to hold the at least one elongate cleat (136, 138) in an extended position when the at least one elongate cleat (136, 138) is disposed proximate to the top of the stripper roller (103, 105), and is configured to hold the at least one elongate cleat (136, 138) in a retracted position when the at least one elongate cleat (136, 138) is proximate to the bottom of the stripper roller (103, 105).

12. A draper header (100) comprising a left side conveyor (102), a right side conveyor (104), a center conveyor (106), a first stripper roller (103) that is disposed at an inner end of the left side conveyor (102), and a second stripper roller (105) that is disposed at an inner end of the right side conveyor (104), wherein the first stripper roller (103) and the second stripper roller (105) are in accordance with Claim 1.
